# EUROPÄISCHE PATENTANMELDUNG

(11) **EP 0 924 948 A1**
(43) Veröffentlichungstag der Anmeldung: **23.06.1999**
(21) Anmeldenummer: 98121782.1
(22) Anmeldetag: 16.11.1998
(51) Int. Cl.: H04Q 7/32

(54) **Funkbetriebenes Kommunikationsendgerät mit Navigationstaste**

(30) Priorität: 16.12.1997 DE 29722222 U
(71) Anmelder: SIEMENS AKTIENGESELLSCHAFT, 80333 München (DE)
(72) Erfinder: Schneider-Hufschmidt, Matthias Dr., 80997 München (DE)

(57) **Zusammenfassung**

Funkbetriebenes Kommunikationsendgerät (1) mit einer auf seiner Tastaturoberfläche angeordneten Navigationstaste (4). Es soll im Bereich der Tastaturoberfläche ein Sensor (5) zur Erkennung von biometrischen Daten (Fingerabdrücke) so positioniert werden, daß für den Benutzer zum Zwecke seiner Identifizierung eine optimale Bedienungslage erreicht wird. Dies wird dadurch erreicht, daß der Sensor (5) in die Betätigungsfläche der Navigationstaste (4) integriert ist.

## Beschreibung

Die vorliegende Erfindung betrifft ein funkbetriebenes Kommunikationsendgerät mit einer auf seiner Tastenoberfläche angeordneten Navigationstaste.

Funkbetriebene Kommunikationsendgeräte, insbesondere Mobilteile von schnurlosen Telefonen oder Handys werden aufgrund von Kundenanforderungen bezüglich ihrer Abmessungen immer kleiner. Dadurch ergeben sich immer größere Schwierigkeiten, die nötige Anzahl von Tasten auf diesen Geräten unterzubringen. Mit der Verbindung von Internet-fähigen Mobilteilen bzw. Handys besteht darüber hinaus die Forderung, bekannte Navigationstasten für sogenannte Internet-Browser in die Tastatur dieses Gerätes einzubringen, die das Bewegen eines Cursors in einem grafischen Display ermöglichen.

Derartige Navigationstasten sind aufgrund der mit ihr durchzuführenden Funktionen relativ groß, da mit diesen Tasen ein Navigieren in bis zu acht Richtungen und einer zusätzlichen Betätigung durch Drücken vorgenommen werden kann.

Bei Handapparaten von Fernsprechgeräten ist es weiterhin bekannt, zur Erkennung von biometrischen Daten, z. B. Fingerabdrücken, Sensoren zu verwenden. Eine derartige Anordnung ist durch die DE 93 04 488 U1 bekannt. Bei dieser bekannten Anordnung besteht das biometrische Abtastsystem aus einem in einem Handapparat angeordneten Fenster, aus einer Optik, einem Bildaufnahmesensor und zumindest einer das Fenster anstrahlenden Lichtquelle. Der Bildaufnahmesensor ist dabei mit einem Kryptochip verbunden.

Bei handelsüblichen Mobiltelefonen ist jedoch aufgrund der Gerätegröße die Unterbringung eines den Fingerabdruck übertragenden Sensors mit Schwierigkeiten verbunden. Auf der Rückseite des Gerätes wird die Benutzung als unhandlich empfunden, während bei einer Unterbringung auf einer Schmalseite jeweils eine Personengruppe bevorzugt bzw. benachteiligt wird, die das Gerät beim Telefonieren in der linken oder in der rechten Hand hält. Die Unterbringung des Sensors auf der die Tastatur aufweisenden Gerätefläche ist wegen des Displays und der Tastatur aus Platzgründen kaum möglich, da ein Sensor 100 bis 200 mm² Fläche benötigt.

Der vorliegenden Erfindung liegt daher die Aufgabe zugrunde, einen Sensor zur Erkennung von biometrischen Daten so zu positionieren, daß für den Benutzer zum Zweck seiner Identifizierung eine optimale Bedienungslage erreicht wird. Gemäß der Erfindung wird diese Aufgabe dadurch gelöst, daß der Sensor zur Erkennung biometrischer Daten in die Betätigungsfläche der Navigationstaste integriert ist.

Durch eine derartige Anordnung ist gewährleistet, daß der Sensor sowohl für den rechten als auch für den linken Daumen des jeweiligen Benutzers gut und sicher erreichbar ist. Dabei kann weiterhin durch eine geeignete Gestaltung der Navigationstaste sichergestellt werden, daß der Sensor bei normaler Verwendung der Navigationstaste als Navigationsinstrument keiner übermäßigen Belastung ausgesetzt wird. Dadurch erhöht sich die Lebensdauer des Sensors.

Gemäß einer bevorzugten Ausgestaltung der Erfindung kann der Sensor innerhalb der Betätigungsfläche der Navigationstaste als ein auf die Spitze gestelltes Quadrat angeordnet sein. Hierbei dürften aufgrund der geringen Abmessungen des unter der Navigationstaste befindlichen Multifunktionsschalters bei der Herstellung der am Sensor benötigten Datenleitungen keine Schwierigkeiten bestehen.

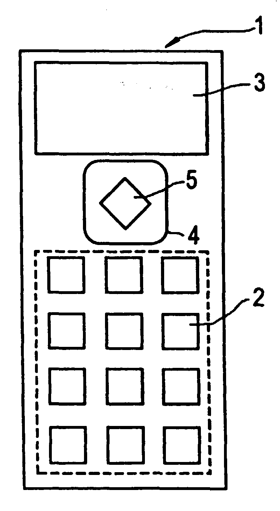

Die Erfindung soll im folgenden anhand eines Ausführungsbeispiels näher erläutert werden, wobei in der Abbildung schematisch ein funkbetriebenes Mobiltelefon dargestellt ist.

Das Mobiltelefon 1 weist eine aus 12 Tasten bestehende Tastatur 2 sowie ein Display 3 auf. Zwischen dem Display 3 und der Tastatur 2 ist die Navigationstaste 4 angeordnet, in deren Fläche der Sensor 5 integriert ist. Mit dem Aufkommen von Internet-fähigen Mobiltelefonen müssen derartige Navigationstasten 4 für sogenannte Internet-Browser in die Tastatur 2 integriert werden, die das Bewegen eines Cursors in einem grafischen Display ermöglichen.

Zur Erkennung von biometrischen Daten werden Sensoren 5 verwendet, die z. B. speziell für die Erkennung des Fingerabdrucks des Eigentümers eingesetzt werden. Ein derartiger Sensor benötigt etwa 100 bis 200 mm² Fläche, die üblicherweise auf der Tastaturoberfläche des Mobiltelefons 1 nicht zur Verfügung stehen. In der vorliegenden Ausführungsform ist der den Fingerabdruck erkennende Sensor 5 auf der Betätigungsfläche einer Navigationstaste 4 angeordnet, die aufgrund der mit ihr durchzuführenden Funktionen relativ groß ist. Mit einer derartigen Navigationstaste kann ein Navigieren in bis zu acht Richtungen und zusätzlich eine Betätigung durch Drücken erfolgen. Der Sensor 5 wird dabei in einer Karoposition, d. h. ein auf die Spitze gestelltes Quadrat angeordnet, so daß der Sensor sowohl für den linken als auch für den rechten Daumen des Benutzers bequem erreichbar ist.

## Patentansprüche

1. Funkbetriebenes Kommunikationsendgerät (1) mit einer auf seiner Tastaturoberfläche angeordneten Navigationstaste (4), **dadurch gekennzeichnet**, daß ein Sensor (5) zur Erkennung biometrischer Daten in die Betätigungsfläche der Navigationstaste (4) integriert ist.

2. Kommunikationsendgerät nach Anspruch 1, **dadurch gekennzeichnet**, daß der Sensor (5) innerhalb der Betätigungsfläche der Navigationstaste (4) als ein auf die Spitze gestelltes Quadrat angeordnet ist.
